# EUROPEAN PATENT APPLICATION

(11) **EP 4 714 812 A1**
(43) Date of publication of application: **25.03.2026**
(21) Application number: 24848348.9
(22) Date of filing: 01.08.2024
(51) Int. Cl.: B62K 19/40

(54) **SHOCK-ABSORBING BICYCLE FRAME, AND BICYCLE OR ELECTRIC BICYCLE**

(30) Priority: 01.08.2023 CN 202310957535; 01.08.2023 CN 202322045313 U
(71) Applicant: ZHANGJIAGANG CHUANSUO CAR INDUSTRY CO., LTD, Suzhou, Jiangsu 215600 (CN)
(72) Inventor: HUANG, Jianhui, Suzhou, Jiangsu 215600 (CN)
(74) Representative: karo IP
(86) International application number: PCT/CN2024/109202
(87) International publication number: WO 2025/026394

(57) **Abstract**

A shock-absorbing bicycle frame, comprising: a front support, which is configured to mount a front wheel and a steering assembly; and a rear support, which is configured to mount a rear wheel, wherein the front support is rotatably connected to the rear support, a seat support and an elastic assembly are arranged between the front support and the rear support, the elastic assembly being rotatably connected to the front support and the rear support, the seat support being articulated at one end to the front support or the rear support and at the other end to the rear support or the front support via a limiting structure. The front support, the rear support and the seat support are rotatably connected to each other, and the elastic assembly is mounted between the front support and the rear support, such that by means of the structure, the impact of the ground on a bicycle and a human body is reduced, thereby achieving a shock absorption effect.

## Description

### TECHNICAL FIELD

The present invention belongs to the technical field of electric bicycles, and particularly relates to a shock-absorbing bicycle frame, and a bicycle or an electric bicycle.

### BACKGROUND

A bicycle, also known as a pedal cycle or bike, may be used as an environmentally friendly means of transportation for commuting and travel. The production focus of the global bicycle industry has shifted from utility-type bicycles to sport-type, mountain-type, and leisure-type bicycles. In developed countries such as the United States and Europe, bicycles are relatively common entertainment products for sports, fitness, and leisure.

With the development of the bicycles, requirements for the bicycles are becoming increasingly high particularly in shock absorption. Shock absorbers are mounted below the seats in some bicycles, and mounted on front forks and/or rear forks in some bicycles, which significantly increases the production costs of the bicycles.

For example, Chinese Patent Application No. CN202223110554.6 discloses a frame structure and a bicycle or an electric bicycle. The frame structure employs two elastic assemblies disposed between a front support and a seat support and between a rear support and the seat support, respectively, resulting in high production costs.

### SUMMARY

To solve the above technical problems, the present invention provides a shock-absorbing bicycle frame and a bicycle or an electric bicycle. The present invention achieves optimization and adjustment on a structure of a bicycle frame, on methods of connection between a seat support and a front support and between the seat support and a rear support, and on an elastic assembly, thereby improving the shock absorption performance of the bicycle frame and the comfort of a rider during cycling.

Specifically, the present invention discloses a shock-absorbing bicycle frame, including:
a front support configured to mount a front wheel and a steering assembly;
a rear support configured to mount a rear wheel, where the front support is rotatably connected to the rear support; and
a seat support and an elastic assembly disposed between the front support and the rear support; where
the elastic assembly is rotatably connected to the front support and the rear support; and
one end of the seat support is articulated to the front support or the rear support, and the other end of the seat support is connected to the rear support or the front support by means of a limiting structure.

According to the above solution, one elastic assembly is disposed between the front support and the rear support, and the seat support connected to the front support and the rear support is disposed above the elastic assembly. When the front wheel encounters an obstacle, the front support moves upward, and the elastic assembly is compressed. Parts of the front support and the rear support connected to the seat support restrict the movement of the seat support, such that a height of the seat support is decreased, thereby keeping a height of a human body unchanged. After the front wheel passes over the obstacle, the elastic assembly returns, and the seat support is simultaneously driven to return. Similarly, when the rear wheel encounters an obstacle, the rear support moves upward, and the front support and the rear support restrict the movement of the seat support, such that the height of the seat support is decreased, thereby keeping the height of the human body unchanged. Further, a hole at a position where one end of the seat support is articulated to the front support, or a hole at a position where one end of the seat support is articulated to the rear support has a circular or oblong shape, and is formed at one end of the seat support.

According to the above solution, the articulation hole is configured in various structures, which facilitates rotation or sliding of a pin shaft in the articulation hole while also restricting movement of the seat support.

Further, the front support includes a first connecting rod, and L-shaped forward mounting plates fixed on both sides of the first connecting rod, where the two forward mounting plates are rotatably connected to the rear support, and a first pin shaft configured to connect the seat support is disposed between the two forward mounting plates.

Further, the rear support includes a second connecting rod, and inverted L-shaped reverse mounting plates fixed at one end of the second connecting rod, where the two reverse mounting plates are rotatably connected to the front support, and a second pin shaft connected to the seat support is disposed between the two reverse mounting plates.

According to the above solution, configuring the forward mounting plates and the reverse mounting plates in an L shape facilitates mounting of the elastic assembly. Additionally, the shock absorption effect is better when the elastic assembly is disposed between the forward mounting plates and the reverse mounting plates. Further, one end of the elastic assembly is rotatably connected to the first pin shaft, the other end of the elastic assembly is rotatably connected to the second pin shaft, and the elastic assembly is one of a helical spring, a damper, or a leaf spring. According to the above solution, the elastic assembly may be of various structures, and the specific structure may be selected according to road conditions.

Further, the limiting structure is an oblong through hole, and the oblong through hole is formed at one end of the seat support and is slidably connected to the first pin shaft or the second pin shaft.

According to the above solution, the oblong through hole is employed at the other end of the seat support, and restricts a movement direction and a movement range of a rear end of the seat support.

Further, the limiting structure includes a limiting plate and a circular through hole, where the circular through hole is formed at one end of the seat support;
the limiting plate is mounted between the forward mounting plates and the seat support, or mounted between the reverse mounting plates and the seat support; and
the limiting plate is connected at one end to the first pin shaft and at the other end to the circular through hole of the seat support via a third pin shaft, and the other end of the seat support is articulated to the second pin shaft; or alternatively, the limiting plate is connected at one end to the second pin shaft and at the other end to the circular through hole of the seat support through the third pin shaft, and the other end of the seat support is articulated to the first pin shaft.

According to the above solution, the limiting plate and the circular through hole restrict the movement direction of the seat support. The seat support may achieve different movement directions and shock absorption effects, suitable for various road conditions. It is only necessary to replace the seat support. The structure is simple and the flexibility is greater.

The present invention further discloses a bicycle, including any one of the above shock-absorbing bicycle frames.

The present invention further discloses an electric bicycle, including any one of the above shock-absorbing bicycle frames.

### BRIEF DESCRIPTION OF THE DRAWINGS

In order to explain the embodiments or technical solutions of the present invention more clearly, the drawings to be used in the embodiments or the prior art will be briefly introduced below.
FIG. 1 is a schematic diagram of a shock-absorbing bicycle frame.
FIG. 2 is an exploded view of a shock-absorbing bicycle frame.
FIG. 3 is a schematic diagram of a limiting structure, including a limiting plate, of a shock-absorbing bicycle frame.
FIG. 4 is an exploded view of a limiting structure, including a limiting plate, of a shock-absorbing bicycle frame.

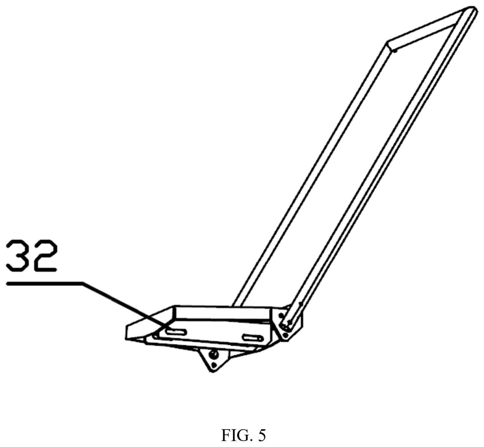

FIG. 5 is a schematic structural view illustrating an oblong articulation hole in a seat support, and an oblong through hole serving as a limiting structure.

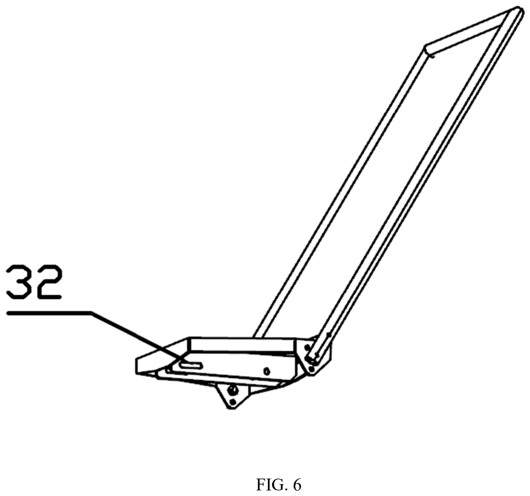

FIG. 6 is a schematic structural view illustrating an oblong articulation hole in a seat support, and a circular through hole serving as a limiting structure.

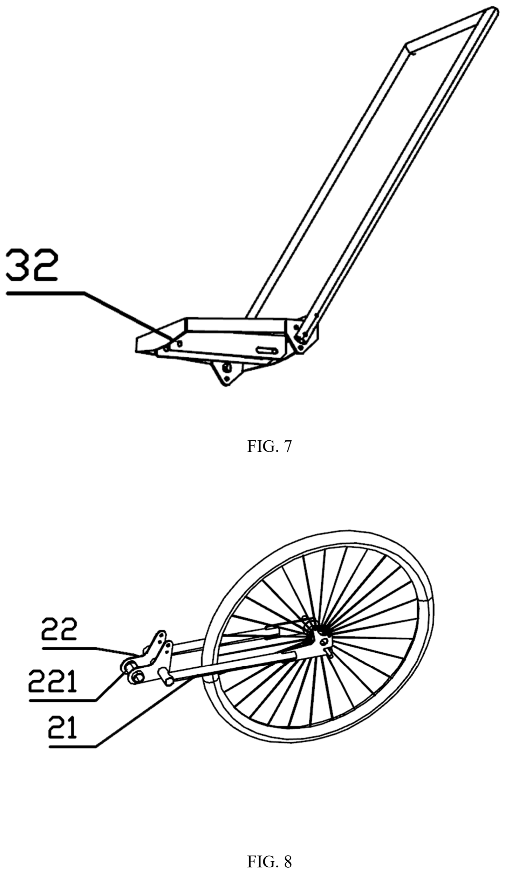

FIG. 7 is a schematic structural view illustrating a circular articulation hole in a seat support, and an oblong through hole serving as a limiting structure.
FIG. 8 is a schematic structural view of a rear support.

Reference numerals in the figures: 1-front support; 11-first connecting rod; 12-forward mounting plate; 13-first pin shaft; 2-rear support; 21-second connecting rod; 22-reverse mounting plate; 221-sleeve; 23-second pin shaft; 24-limiting plate; 25-third pin shaft; 29-rear wheel; 3-seat support;31-seat; 32-articulation hole; 4-steering assembly; 41-handlebar; 42-front fork; 43-front wheel; and 6-elastic assembly.

### DETAILED DESCRIPTION OF EMBODIMENTS

The present invention will be described further in detail in combination with the drawings.

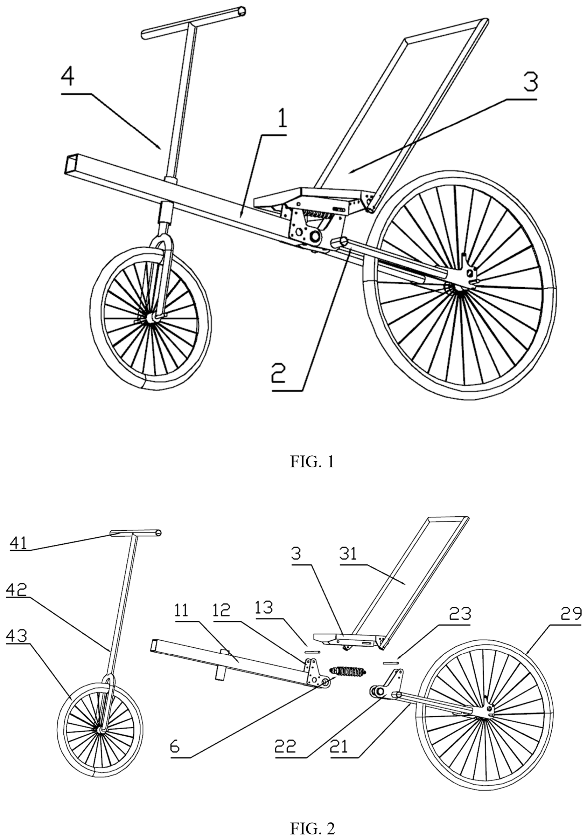

As shown in FIGS. 1 and 2, the present invention discloses a shock-absorbing bicycle frame, including:
a front support 1 configured to mount a front wheel 43 and a steering assembly 4;
a rear support 2 configured to mount a rear wheel 29, where the front support 1 is rotatably connected to the rear support 2 through a connector, and a connector is a sleeve 221; and
a seat support 3 and an elastic assembly 6 disposed between the front support 1 and the rear support 2; where
the elastic assembly 6 is rotatably connected to the front support 1 and the rear support 2; and
the seat support 3 is articulated at one end to the front support 1 or the rear support 2, and at the other end to the rear support 2 or the front support 1 via a limiting structure.

The front support 1 includes a first connecting rod 11, and L-shaped forward mounting plates 12 fixed on both sides of the first connecting rod 11, where the two forward mounting plates 12 are rotatably connected to the rear support 2 through the sleeve 221, and a first pin shaft 13 configured to connect the seat support 3 is disposed between the two forward mounting plates 12.

Specifically, a hole 32 at a position where the seat support 3 is articulated to the front support 1 or the rear support 2 has not only a circular shape but also an oblong or arc shape, and is located at one end of the seat support 3.

The rear support 2 includes a second connecting rod 21, and inverted L-shaped reverse mounting plates 22 fixed at one end of the second connecting rod 21, where the rear wheel 29 is mounted at other end of the second connecting rod 21, the two reverse mounting plates 22 are rotatably connected to the front support 1 through the sleeve 221, and a second pin shaft 23 connected to the seat support 3 is disposed between the two reverse mounting plates 22.

The steering assembly 4 includes a front fork 42 rotatably connected to the first connecting rod 11, and a handlebar 41 configured to control the front fork 42, where a front wheel 43 is mounted at a bottom of the front fork 42, the handlebar 41 is fixedly mounted at a top of the front fork 42 and configured to control a traveling direction of the front wheel 43.

One end of the elastic assembly 6 is rotatably mounted on the first pin shaft 13, the other end of the elastic assembly 6 is rotatably mounted on the second pin shaft 23, and the elastic assembly 6 is one of a helical spring, a damper, or a leaf spring. Specifically, the limiting mechanism is disposed at one end of the seat support 3 and configured as an oblong through hole. When the first pin shaft 13 is articulated to the seat support 3, the second pin shaft 23 is slidably connected to the seat support 3 through the oblong through hole; and when the first pin shaft 13 is slidably connected to the seat support 3 through the oblong through hole, the second pin shaft 23 is articulated to the seat support 3.

In a practical application, when the front wheel 43 encounters an obstacle, the front support 1 pivots around the sleeve 221 and moves upward, and the elastic assembly 6 is compressed. The first pin shaft 13 or the second pin shaft 23 rotates or slides in the articulation hole 32, while the second pin shaft 23 or the first pin shaft 13 slides in the oblong through hole. The articulation hole 32 and the oblong through hole restrict a movement direction of the seat support 3, such that a height of the seat support 3 is decreased, thereby keeping a height of a human body unchanged. After the front wheel 43 passes over the obstacle, the elastic assembly 6 returns, and the seat support 3 is simultaneously driven to return. Similarly, when the rear wheel 29 encounters an obstacle, the rear support 2 moves upward, and the articulation hole 32 or the oblong through hole restricts the movement direction of the seat support 3, such that the height of the seat support 3 is decreased, thereby keeping the height of the human body unchanged.

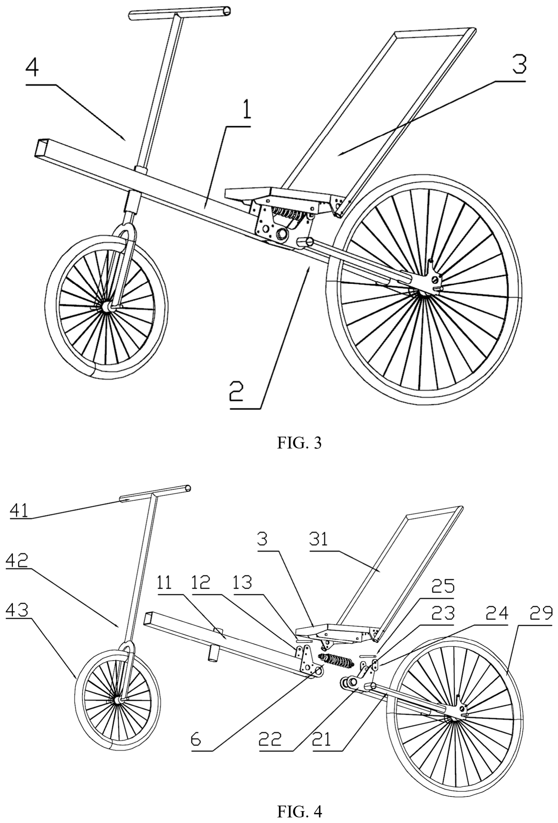

As shown in FIGS. 3 and 4, in some embodiments of the present invention, the difference from other embodiments lies in that the limiting structure includes a limiting plate 24 and a circular through hole, where the limiting plate 24 is mounted between the forward mounting plates 12 and the seat support 3, or between the reverse mounting plates 22 and the seat support 3, and the circular through hole is formed at one end of the seat support 3.

In a practical application, when the front wheel 43 encounters an obstacle, the front support 1 pivots around the sleeve 221 and moves upward, and the elastic assembly 6 is compressed. The third pin shaft 25 rotates in the circular through hole, the second pin shaft 23 rotates or slides in the articulation hole 32, and the limiting plate 24 also swings between the forward mounting plates 12 and the seat support 3; or alternatively, the first pin shaft 13 rotates or slides in the articulation hole 32, the third pin shaft 25 rotates in the circular through hole, and the limiting plate 24 also swings between the reverse mounting plates 22 and the seat support 3. The articulation hole 32, the limiting plate 24, and the circular through hole cooperate to restrict the movement direction of the seat support 3, such that the height of the seat support 3 is decreased, thereby keeping the height of the human body unchanged. After the front wheel passes over the obstacle, the elastic assembly 6 returns, and the seat support 3 is simultaneously driven to return. Similarly, when the rear wheel 29 encounters an obstacle, the rear support 2 moves upward, and the articulation hole 32, the limiting plate 24, and the circular through hole restrict the movement direction of the seat support 3, such that the height of the seat support 3 is decreased, thereby keeping the height of the human body unchanged.

Additionally, when both ends of the seat support 3 are simultaneously rotatably connected to the front support 1 and the rear support 2 (i.e., connected through the circular through holes), such a connection forms a fixed triangle that restricts the movement of the front support 1 and the rear support 2, such that the elastic assembly 6 cannot work.

Therefore, the seat support 3 is articulated at one end to the front support 1 and at the other end to the rear support 2 via the limiting structure; or alternatively, the seat support 3 is articulated at one end to the rear support 2 and at the other end to the front support 1 via the limiting structure. This limiting structure connection allows relative non-pure rotational displacement between the front support 1 or/and the rear support 2 and the seat support 3, thereby enabling relative rotation between the front support 1 and the rear support 2. The elastic assembly 6 is compressed or extended and returns, thereby achieving shock absorption.

During normal riding, the elastic assembly 6, under the action of an elastic force, pushes the front support 1 and the rear support 2 apart outwardly, and through the limitation by the seat support 3 or the self-limitation of the elastic assembly 6, the front support 1 and the rear support 2 form a stable structure.

When the seat support 3 is articulated at one end to the front support 1 and at the other end to the rear support 2 via the limiting structure, this combined limiting structure connection may also involve the seat support 3 and the rear support 2 abutting against each other, and is positioned by the downward pressure of the weight of a rider. When the front support 1 or/and the rear support 2 encounters/encounter an obstacle, the front support 1 and the rear support 2 rotate relative to each other, the seat support 3 and the front support 1 rotate relative to each other, and the seat support 3 and the rear support 2 undergo relative displacement. The elastic assembly 6 is compressed, thereby also achieving shock absorption.

The present invention further provides a bicycle, including any one of the above shock-absorbing bicycle frame structures. Based on the above bicycle frame, a seat 31, a steering assembly 4, a front wheel 43, and a rear wheel 29 are mounted. The seat 31 is mounted on the seat support 3, and the front wheel 43 is mounted on the front fork 42 of the steering assembly 4. The steering of the front wheel 43 is controlled by the handlebar 41, such that a traveling direction of the bicycle is controlled. The rear wheel 29 is mounted on the rear support 2.

The present invention further provides an electric bicycle, including any one of the above shock-absorbing bicycle frame structures. A motor may be disposed on the front support 1 or the rear support 2, and a battery is mounted at a suitable position of the front support 1 or the rear support 2, and power is supplied to the front wheel 43 or the rear wheel 29 through a transmission assembly, thereby forming an electric bicycle.

For those of ordinary skill in the art, some transformations and improvements may be made without deviating from creative concepts of the present invention, and these transformations and improvements should fall within the protection scope of the present invention.

## Claims

1. A shock-absorbing bicycle frame, **characterized by** comprising:
a front support (1) configured to mount a front wheel (43) and a steering assembly (4);
a rear support (2) configured to mount a rear wheel (29), wherein the front support (1) is rotatably connected to the rear support (2); and
a seat support (3) and an elastic assembly (6) disposed between the front support (1) and the rear support (2); wherein
the elastic assembly (6) is rotatably connected to the front support (1) and the rear support (2); and
one end of the seat support (3) is articulated to the front support (1) or the rear support (2), and the other end of the seat support (3) is connected to the rear support (2) or the front support (1) by means of a limiting structure.

2. The shock-absorbing bicycle frame according to claim 1, **characterized in that** a hole at a position where one end of the seat support (3) is articulated to the front support (1), or a hole at a position where one end of the seat support (3) is articulated to the rear support (2) has a circular or oblong shape, and is formed at one end of the seat support (3).

3. The shock-absorbing bicycle frame according to claim 1, **characterized in that** the front support (1) comprises a first connecting rod (11), and L-shaped forward mounting plates (12) fixed on both sides of the first connecting rod (11), wherein the two forward mounting plates (12) are rotatably connected to the rear support (2), and a first pin shaft (13) configured to connect the seat support (3) is disposed between the two forward mounting plates (12).

4. The shock-absorbing bicycle frame according to claim 2, **characterized in that** the rear support (2) comprises a second connecting rod (21), and inverted L-shaped reverse mounting plates (22) fixed at one end of the second connecting rod (21), wherein the two reverse mounting plates (22) are rotatably connected to the front support (1), and a second pin shaft (23) connected to the seat support (3) is disposed between the two reverse mounting plates (22).

5. The shock-absorbing bicycle frame according to claim 3 or 4, **characterized in that** one end of the elastic assembly (6) is rotatably connected to the first pin shaft (13), the other end of the elastic assembly (6) is rotatably connected to the second pin shaft (23), and the elastic assembly (6) is one of a helical spring, a damper, or a leaf spring.

6. The shock-absorbing bicycle frame according to claim 4, **characterized in that** the limiting structure is an oblong through hole, and the oblong through hole is formed at one end of the seat support (3) and is slidably connected to the first pin shaft (13) or the second pin shaft (23).

7. The shock-absorbing bicycle frame according to claim 4, **characterized in that** the limiting structure comprises a limiting plate (24) and a circular through hole, wherein the circular through hole is formed at one end of the seat support;
the limiting plate (24) is mounted between the forward mounting plates (12) and the seat support (3), or mounted between the reverse mounting plates (22) and the seat support (3); and
the limiting plate (24) is connected at one end to the first pin shaft (13) and at the other end to the circular through hole of the seat support (3) via a third pin shaft (25), while the other end of the seat support (3) is articulated to the second pin shaft (23); or alternatively, the limiting plate (24) is connected at one end to the second pin shaft (23) and at the other end to the circular through hole of the seat support (3) via the third pin shaft (25), and the other end of the seat support (3) is articulated to the first pin shaft (13).

8. A bicycle, **characterized by** comprising the shock-absorbing bicycle frame according to any one of claims 1-7.

9. An electric bicycle, **characterized by** comprising the shock-absorbing bicycle frame according to any one of claims 1-7.
